# EUROPÄISCHE PATENTSCHRIFT

(11) **EP 3 167 712 B1**
(45) Veröffentlichungstag und Bekanntmachung des Hinweises auf die Patenterteilung: **30.11.2022**
(21) Anmeldenummer: 16401083.7
(22) Anmeldetag: 02.11.2016
(51) Int. Cl.: A01M 7/00

(54) **SPRITZEINRICHTUNG ZUM VERSPRÜHEN VON FLÜSSIGKEITEN UND VERFAHREN ZUM VERSPRÜHEN VON FLÜSSIGKEITEN**
SPRAY DEVICE FOR SPRAYING LIQUIDS, AND METHOD FOR THE SPRAYING OF A LIQUID
DISPOSITIF DE PULVÉRISATION DE LIQUIDES ET PROCÉDÉ DE PULVÉRISATION DE LIQUIDES

(30) Priorität: 06.11.2015 DE 102015119084
(43) Veröffentlichungstag der Anmeldung: 17.05.2017
(60) Teilanmeldung: 22202633.8
(73) Patentinhaber: Amazonen-Werke H. Dreyer SE & Co. KG, 49205 Hasbergen (DE)
(72) Erfinder: Austermann, Stefan, 48291 Telgte (DE); große Prues, Frank, 49434 Neuenkirchen-Vörden (DE)

(56) Entgegenhaltungen:
- EP-A1- 1 378 293
- EP-A1- 1 932 423
- FR-A1- 2 964 047
- US-A- 4 067 498

## Beschreibung

Die Erfindung betrifft eine Spritzeinrichtung zum Versprühen von Flüssigkeiten, insbesondere für landwirtschaftliche Zwecke, gemäß dem Oberbegriff des Anspruchs 1. Des Weiteren betrifft die Erfindung ein Verfahren zum Versprühen von Flüssigkeiten, insbesondere für landwirtschaftliche Zwecke, gemäß dem Oberbegriff des Anspruchs 12.

Die hier in Rede stehenden Spritzeinrichtungen werden insbesondere in landwirtschaftlichem Bereich zum Versprühen von Flüssigkeiten auf Felder beziehungsweise Pflanzen verwendet. Bei den Flüssigkeiten handelt es sich typischerweise um Pflanzenschutzmittel und Ähnliches, die auf Grund der guten Dosierbarkeit typischerweise in flüssiger Form ausgebracht werden.

Dabei dient eine Trägerflüssigkeit, wie insbesondere Wasser, dazu, entsprechende Wirkstoffe zu verteilen. Dies erfolgt im Stand der Technik typischerweise durch eine Vielzahl separat ansteuerbarer Spritzdüsen. Diese Spritzdüsen sind dabei an wenigstens einem insbesondere faltbaren, quer zur Fahrtrichtung angeordneten Ausleger angeordnet. Somit kann zu beiden Seiten der Spritzeinrichtung eine breite Fläche bearbeitet werden, während die Spritzeinrichtung über die Fläche verfahren wird. Die separate Ansteuerbarkeit der Spritzdüsen gewährleistet, dass eine gezielte, flächenspezifische Deposition der Flüssigkeit beim Verfahren über die zu bearbeitende Fläche möglich wird.

Hierzu ist die Trägerflüssigkeit in einem Vorratstank der Spritzeinrichtung gelagert. Eine Pumpeinrichtung dient zur Förderung der Trägerflüssigkeit aus dem wenigstens einen Vorratstank zu den Spritzdüsen. Hierzu ist wenigstens eine Flüssigkeitsleitung vorgesehen.

Nachteilig an den bekannten Spritzeinrichtungen ist, dass die auszubringende Menge Wirkstoff pro Fläche bereits vor dem Ausbringprozess festgelegt werden muss, da in einem großen Vorratsbehälter mit einem typischen Volumen von mehreren tausend Litern die Spritzbrühe fertig angemischt werden muss. Somit kann die auszubringende Menge Wirkstoff nicht flexibel angepasst werden, beispielsweise indem gezielt individuelle Pflanzen mit Wirkstoff besprüht werden, ohne dass zuvor nicht absehbare Restmengen übrig bleiben, die dann aufwendig entsorgt werden müssten.

Eine Spritzeinrichtung zum Versprühen von Flüssigkeiten und Verfahren zum Versprühen von Spritzflüssigkeiten gemäß der Oberbegriffe der Ansprüche 1 und 12 ist durch die EP 1 932 423 A1 und die FR 2 964 047 A1 bekannt. Die US 4 067 498 A zeigt ein Vermischen einer Flüssigkeit mit einem Wirkstoff in einer Düse.

Die Aufgabe der vorliegenden Erfindung besteht darin, eine Spritzeinrichtung und ein Verfahren zum Versprühen von Flüssigkeiten anzugeben, dass die genannten Nachteile beseitigt.

Die Aufgabe wird gelöst durch eine Spritzeinrichtung mit den Merkmalen des Anspruchs 1. Die Spritzeinrichtung zeichnet sich demnach dadurch aus, dass im Bereich der Spritzdüsen wenigstens eine Einspeisevorrichtung zum Vermischen wenigstens eines Wirkstoffs aus einem Wirkstofftank mit der Trägerflüssigkeit vorgesehen ist. Bei der Einspeisevorrichtung kann es sich beispielsweise um eine Mischkammer handeln, in die die beiden Bestandteile hineingegeben werden, insbesondere eingespritzt werden. Hierzu sind jeweils entsprechende Einlässe für den Wirkstoff und die Trägerflüssigkeit vorgesehen. Das Vermischen erfolgt insbesondere unmittelbar an beziehungsweise in der Spritzdüse. Es kann aber auch eine separate Vorrichtung zum Mischen an der Spritzdüse vorgesehen sein. Ein Vermischen der Komponenten beziehungsweise Bestandteile kann aber auch aktiv durch eine vorbeziehungsweise in der Einspeisevorrichtung vorgesehene Mischeinheit erfolgen. Vorteilhaft beim Zusammenbringen beziehungsweise Vermischen des Wirkstoffs mit der Trägerflüssigkeit erst im Bereich der Spritzdüsen ist insbesondere, dass keine nennenswerten Restmengen vorgemischter Kombinationen aus Trägerflüssigkeit und Wirkstoff übrig bleiben und zu beseitigen sind. Die Einspeisevorrichtung kann auch als Ventil ausgebildet sein. Vorzugsweise beinhaltet der Wirkstofftank den Wirkstoff in konzentrierter Form. Es handelt sich dabei insbesondere um ein Wirkstoffkonzentrat. Damit wird erreicht, dass bereits mit geringen Mengen des Wirkstoffs große Mengen der fertigen Spritzflüssigkeit beziehungsweise Spritzbrühe hergestellt werden können. In dieser Form wird der Wirkstoff mit der Trägerflüssigkeit zusammengebracht. Dabei sind große Mischungsverhältnisse mit kleinen Mengen des Wirkstoffs und relativ großen Mengen der Trägerflüssigkeit vorzusehen. Gegebenenfalls kann der Wirkstoff im Wirkstofftank allerdings auch in vorverdünnter Form im Wirkstofftank vorliegen. Damit kann insbesondere die Dosierung erleichtert werden, da dann größere Mengen des vorverdünnten Wirkstoffs zum Einstellen der ausbringfähigen Konzentration benötigt werden. Durch eine Vorverdünnung wir im Allgemeinen auch das Vermischen des Wirkstoffs mit der Trägerflüssigkeit sehr erleichtert, da sich üblicherweise die Viskositäten des Wirkstoffkonzentrats stark von der der Trägerflüssigkeit unterscheidet. Eine Mischung des Konzentrats mit der Trägerflüssigkeit direkt an der Düse wird durch diese Tatsache erschwert.

Die Spritzdüsen sind dazu ausgebildet, dass der wenigstens eine Wirkstoff diesen in konzentrierter oder vorverdünnter Form zuführbar ist. Dementsprechend weisen die Spritzdüsen eine entsprechende Zuführung beziehungsweise Einspeisevorrichtung vor, um konzentrierten oder vorverdünnten Wirkstoff verwenden zu können. Das Mischungsverhältnis zwischen dem wenigstens einen Wirkstoff und der Trägerflüssigkeit kann damit entsprechend eingestellt werden.

In einer vorteilhaften Ausgestaltung wird der Wirkstoff den Spritzdüsen zum Zuführen und Vermischen mit der Trägerflüssigkeit in vorverdünnter Form zugeführt. Auf diese Weise kann eine an die Trägerflüssigkeit angepasste Viskosität des vorverdünnten Wirkstoffes erreicht werden, was zu einer besseren Durchmischung von Trägerflüssigkeit und vorverdünntem Wirkstoff führt.

In einer vorteilhaften Weiterbildung wird mittels einer Pumpe ein vorverdünnter Wirkstoff aus einem Wirkstofftank angesaugt und durch eine Ringleitung gepumpt wird, so dass der vorverdünnte Wirkstoff direkt im Bereich der Spritzdüsen ansteht, wobei der vorverdünnte Wirkstoff eine im Vergleich zum auf dem Feld ausgebrachten Wirkstoff 5 bis 50 fach höhere, insbesondere eine 10 bis 30 fach höhere, Konzentration an Wirkstoff aufweist. Diese Konzentrationen haben sich als vorteilhaft erwiesen, weil bei vielen Arten von Wirkstoffen hiermit eine Viskosität des vorverdünnten Wirkstoffes erreicht werden kann, welche eine gute Durchmischung mit der Trägerflüssigkeit zulässt und andererseits die Flüssigkeitsmengen des vorverdünnten Wirkstoffes nicht so groß sind, als dass Restmengen nicht mehr handhabbar wären. Die vorteilhafte Konzentration des Wirkstoffes ist jedoch wirkstoffmittelabhängig und kann für bestimmte Wirkstoffe auch höher oder niedriger als die angegebenen Konzentrationen sein.

Der wenigstens eine Wirkstoff ist zur Verdünnung mit Trägerflüssigkeit versetzt. Dies kann insbesondere bereits im Vorratstank der Trägerflüssigkeit erfolgen. Dies kann auch an anderer geeigneter Stelle der Spritzeinrichtung vorgesehen sein. Insbesondere erfolgt das Verdünnen beziehungsweise Vorverdünnen des Wirkstoffs vor dem Zuführen zur Spritzdüse. Der Wirkstoff kann so mittels der an der Spritzeinrichtung in jedem Fall bereits in hinreichender Menge vorgesehenen Trägerflüssigkeit verdünnt beziehungsweise vorverdünnt werden, bevor er der Spritzdüse zum eigentlichen Vermischen der Trägerflüssigkeit zugeführt wird. Hiermit kann die Dosierbarkeit des Wirkstoffs verbessert werden, da die Zugabemengen zur Einstellung einer vorgegebenen Konzentration größer sein können. Tatsächlich erfolgt somit insbesondere eine mehrstufige Verdünnung des Wirkstoffs. Alternativ zu der Trägerflüssigkeit kann auch eine andere Flüssigkeit zum Vorverdünnen des Wirkstoffs verwendet werden. Umgekehrt kann die Trägerflüssigkeit bereits selber einen Wirkstoff enthalten. Somit wird eine Vordosierung und eine Nachdosierung ermöglicht. Auch können unterschiedliche Wirkstoffe kombiniert werden. Besonders bevorzugt wird der wenigstens eine verdünnte Wirkstoff in wenigstens einem separaten Tank und/oder einem Leitungsabschnitt gemischt und/oder bevorratet. Damit kann einer Anforderung verdünnten Wirkstoffs durch die Spritzdüsen jederzeit entsprochen werden.

Weiter bevorzugt ist wenigstens eine Überdruckpumpe und/oder wenigstens ein Rückschlagventil zur Zuführung von Trägerflüssigkeit zu wenigstens einem Wirkstoff vorgesehen. Um die Trägerflüssigkeit zum Wirkstoff zugeben zu können, muss für eine entsprechende Zuführung gesorgt werden. Dies kann beispielsweise durch eine Überdruckpumpe erreicht werden, die beispielsweise aus dem Vorratstank Trägerflüssigkeit entnimmt und einem Behältnis mit dem Wirkstoff zuführt. Damit kann eine Vermischung der Trägerflüssigkeit mit dem Wirkstoff erfolgen. Durch Einsatz eines Rückschlagventils wird ein Rückfluss von mit dem Wirkstoff versehener Trägerflüssigkeit wirksam verhindert. Bei geeigneter Ausbildung der Überdruckpumpe kann dies allerdings auch bereits durch diese erfolgen. Die Überdruckpumpe dient zur Bereitstellung hinreichender Mengen Trägerflüssigkeit zum Verdünnen des Wirkstoffs.

Vorzugsweise ist wenigstens eine separate Flüssigkeitsleitung zum Fördern von wenigstens einem Wirkstoff von Wirkstofftank zu den Spritzdüsen vorgesehen. Besonders bevorzugt ist wenigstens eine separate Pumpeinrichtung für den Wirkstoff eingerichtet. Durch eine separate Zuführung des Wirkstoffs zu den Spritzdüsen kann ein vorzeitiges, ungewolltes Vermischen verhindert werden. Außerdem ist eine gezielte Einbringung des Wirkstoffs erst im Bereich der Spritzdüsen möglich. Durch eine separate Pumpeinrichtung wird die Förderung des Wirkstoffs zu den Spritzdüsen sichergestellt. Die Pumpeinrichtung kann allerdings auch mit einer Pumpeinrichtung für die Trägerflüssigkeit gekoppelt werden.

Weiter bevorzugt ist ein Kreislauf für wenigstens einen vorverdünnten Wirkstoff vorgesehen. Besonders bevorzugt ist wenigstens eine Pumpe, insbesondere Umwälzpumpe zum Umwälzen des wenigstens einen vorverdünnten Wirkstoffs im Kreislauf vorgesehen. Durch ein Umwälzen des Wirkstoffs beziehungsweise vorverdünnten Wirkstoffs in einem Kreislauf kann jederzeit die gewünschte Menge des Wirkstoffs im Bereich der einzelnen Spritzdüsen abgerufen werden. Umgekehrt wird eine Bereitstellung größerer Mengen des vorverdünnten Wirkstoffs vermieden, da die Menge des vorverdünnten Wirkstoffs im Kreislauf begrenzt ist. Der im Kreislauf umgepumpte vorverdünnte Wirkstoff kann jederzeit durch Zuführung des Wirkstoffs und gegebenenfalls weiterer Trägerflüssigkeit nachgefüllt werden. Damit wird erreicht, dass die erfindungsgemäß zur Aufgabenlösung erreicht wird.

Die Spritzdüsen weisen besonders bevorzugt wenigstens ein Ventil und/oder wenigstens eine Blende auf. Indem das Ventil und/oder die Blende separat ansteuerbar sind, kann eine gezielte Freigabe entsprechender Flüssigkeiten an der Spritzdüse erfolgen. Insbesondere ist die Abgabe von Trägerflüssigkeit und/oder Wirkstoff aus wenigstens einer unabhängigen Spritzmittelleitung steuerbar. Damit kann sowohl die Trägerflüssigkeit als auch der Wirkstoff im Bereich der Spritzdüse zugegeben werden. Es kann sich dabei insbesondere auch um vorverdünnte Wirkstoffe oder mit einem Wirkstoff versehene Trägerflüssigkeit handeln. Vorzugsweise werden mehrere Ventile und/oder Blenden je Spritzdüse insbesondere separat steuerbar vorgesehen.

Bei den Ventilen und/oder Blenden handelt es sich insbesondere um einstellbare Ventile beziehungsweise Blenden. Die Einstellbarkeit betrifft insbesondere die Durchflussmenge. Die Durchflussmenge kann dementsprechend zeitlich variabel einstellbar sein. Dabei kann aber auch ein vollständiges Abschalten der Zufuhr erfolgen. Als in der Durchflussmenge einstellbaren Ventile eignen sich beispielsweise Pulsweitenmodulierte Ventile (PWM-Ventile). Letztere lassen sich sehr schnell und exakt steuern. Die Blenden können dagegen insbesondere zum Ein- und Abschalten des Flüssigkeitsstroms ausgebildet sein. Durch eine Einstellbarkeit der Flüssigkeitsmengen und des Flüssigkeitsdurchsatzes kann eine feine Regulierung der abgegebenen Spritzmittelmengen und deren Konzentration erfolgen. Dementsprechend kann eine flächenspezifische Abgabe des Wirkstoffs durch die erfindungsgemäße Spritzeinrichtung sichergestellt werden.

In einer alternativen Ausgestaltung weisen die Blenden einen vor dem Ausbringvorgang festgelegten Durchsatz an Flüssigkeit auf. Auf diese Weise lässt sich die vorliegende Erfindung besonders kostensparend und einfach aufbauen, da nicht auf teure Ventile mit sehr kurzen Ansprechzeiten zurückgegriffen werden muss. Vielmehr kann im Vorfeld des Ausbringvorganges festgelegt werden, welcher Durchsatz an Wirkstoff für den Bearbeitungsvorgang benötigt wird. Dieser Durchsatz wird dann während des Ausbringvorganges beibehalten. Hierfür können beispielsweise austauschbare Blenden mit einem konstanten Durchmesser vorgesehen sein, die entsprechend der geplanten Wirkstoffanwendung vor dem Ausbringvorgang gewählt werden. Alternativ können auch manuell oder automatisch einstellbare Blenden vorgesehen sein, welche automatischen Blenden allerdings typischerweise eine lange Ansprechzeit aufweisen und dementsprechend nicht während des Ausbringvorganges in ausreichender Geschwindigkeit regelbar sind.

Die eingangs genannte Aufgabe wird außerdem gelöst durch ein Verfahren zum Versprühen von Flüssigkeiten, insbesondere für landwirtschaftliche Zwecke, mit den Maßnahmen des Anspruchs 11. Hierbei kann insbesondere eine Spritzeinrichtung verwendet werden, wie sie oben beschrieben ist. Es wird eine Trägerflüssigkeit, insbesondere Wasser, mit wenigstens einer Pumpeinrichtung aus einem Vorratstank zu einer Vielzahl separat ansteuerbarer Spritzdüsen befördert. Das Verfahren zeichnet sich dadurch aus, dass wenigstens ein Wirkstoff im Bereich der Spritzdüsen mit der Trägerflüssigkeit vermischt wird. Eine solche Direkteinspritzung vermeidet Restmengen vorverdünnten Wirkstoffs beziehungsweise angemischter Trägerflüssigkeit. Durch eine Vermischung direkt an der Spritzdüse wird außerdem ein gezielter Einsatz des Spritzmittels beziehungsweise Wirkstoff möglich. Damit lassen sich die ausgebrachten Mengen des Wirkstoffs flächenspezifisch einstellen.

Falls sich die Viskositäten von Wirkstoff und Trägerflüssigkeit sehr stark unterscheiden, kann dies das Vermischen im Bereich der Spritzdüsen sehr stark erschweren. In diesem Fall ist es von Vorteil, wenn der wenigstens eine Wirkstoff vor dem Mischen im Bereich der Spritzdüsen mittels der Trägerflüssigkeit verdünnt wird. Auf diese Weise wird eine bereits vorgemischte Brühe mit angepasster Viskosität zu den Spritzdüsen gebracht und dann dort auf die auszubringende Wirkstoffkonzentration gebracht, also mit der Trägerflüssigkeit erneut vermischt.

Der Wirkstoff wird insbesondere zur zu verspritzenden Trägerflüssigkeit im Bereich der Spritzdüsen zugegeben. Hierzu ist vorzugsweise eine Mischkammer vorgesehen. In diese Mischkammer wird sowohl der Wirkstoff als auch die zu verspritzende Trägerflüssigkeit hineingegeben. Es handelt sich dabei um wenigstens einen Wirkstoff. Gegebenenfalls können auch mehrere Wirkstoffe zugegeben werden. Diese können vorvermischt sein oder auch einzeln zugegeben werden. Insbesondere kann für jeden der Wirkstoffe eine separate Zuführung vorgesehen sein.

Der wenigstens eine Wirkstoff wird zu den Spritzdüsen in vorverdünnter Form transportiert. Hierzu dient insbesondere eine Pumpvorrichtung, sodass der Wirkstoff gepumpt wird, insbesondere durch eine entsprechende Flüssigkeitsleitung. Für jeden der Wirkstoffe kann eine separate Flüssigkeitsleitung und/oder Pumpeinrichtung vorgesehen sein. Damit wird ein gezielter Einsatz der einzelnen Wirkstoffe erreicht. Die Wirkstoffzusammensetzung kann aber auch aus mehreren Wirkstofftanks zusammengemischt werden, gegebenenfalls vorverdünnt werden und dann zu den Spritzdüsen transportiert werden. Eine vorverdünnte Form des wenigstens einen Wirkstoffs erleichtert die Dosierbarkeit. Ein hochkonzentrierter Wirkstoff muss in extrem kleinen Mengen zugegeben werden. Größere Mengen des Wirkstoffs lassen sich dagegen einfacher abmessen. Somit werden Überdosierungen wirksam vermieden. Außerdem wird eine bessere Vermischung des vorverdünnten Wirkstoffs mit der Trägerflüssigkeit erreicht.

Der wenigstens eine Wirkstoff wird mittels der Trägerflüssigkeit verdünnt. Indem die bereits an der Spritzeinrichtung vorhandene Trägerflüssigkeit zum Verdünnen verwendet wird, wird zusätzlicher Aufwand für die Bereitstellung weiterer Tanks vermieden. Außerdem wird durch Verwendung derselben Trägerflüssigkeit die Vermischung optimal sichergestellt. Alternativ kann der Wirkstoff auch in einem separaten Tank in vorverdünnter Form bevorratet sein.

Der wenigstens eine Wirkstoff wird vorzugsweise in einem separaten Kreislauf vermischt und/oder bevorratet und/oder umgewälzt. Mehrere der Spritzdüsen, vorzugsweise alle Spritzdüsen werden mittels des Kreislaufs mit dem wenigstens einen Wirkstoff versorgt, insbesondere in vorverdünnter Form. Ein Kreislauf bietet den Vorteil, dass der darin beinhaltete Wirkstoff jederzeit an alle Spritzdüsen zuführbar ist. Dabei sind entsprechende Mengen des Wirkstoffs in dem Kreislauf zu bevorraten beziehungsweise entsprechend nachzufüllen. Durch Umwälzen wird eine besonders gute, vorzugsweise kontinuierliche Mischung des Wirkstoffs erreicht und Ablagerungen können vermieden werden.

Weiter bevorzugt enthält die Trägerflüssigkeit wenigstens einen verdünnten Wirkstoff. Dabei kann die Mischung von Trägerflüssigkeit und Wirkstoff vorzugsweise im Vorratstank erfolgen. Alternativ oder ergänzend kann die Mischung mittels einer separaten Mischvorrichtung hergestellt werden. Besondere bevorzugt handelt es sich bei dem in der Trägerflüssigkeit vorhandenen Wirkstoff um hinreichend geringe Konzentrationen oder unproblematische Wirkstoffe, sodass eine Entsorgung keine Schwierigkeiten darstellt. Somit werden die erfindungsgemäßen Ziele erreicht. Weitere, insbesondere problematische Wirkstoffe lassen sich dann separat im Bereich der Spritzdüsen zu dosieren.

Bevorzugte Ausführungsbeispiele der Erfindung werden im Folgenden anhand der Zeichnung näher beschrieben. In dieser zeigt:
- Fig. 1: eine seitliche Schnittansicht einer erfindungsgemäßen Spritzeinrichtung und
- Fig. 2: eine seitliche Schnittansicht einer zweiten erfindungsgemäßen Spritzeinrichtung.

In der Zeichnung ist eine erfindungsgemäße Spritzeinrichtung 10 im Querschnitt darstellt. Die Spritzeinrichtung 10 dient zum Ausbringen von Flüssigkeiten auf einem Feld.

Hierzu ist ein Tank 11 vorgesehen, der eine Trägerflüssigkeit 12 enthält. Gegebenenfalls kann ein Zusatztank 13 vorgesehen sein, der eine weitere Zusatzflüssigkeit 14 enthält, beispielsweise einen Wirkstoff, wie einen Dünger, ein Pflanzenschutzmittel oder Ähnliches.

Der Vorratstank 11 wie auch gegebenenfalls der Zusatztank 13 sind über Flüssigkeitsleitungen 15 mit einer Vielzahl von Spritzdüsen 16 verbunden. Diese Flüssigkeitsleitungen 15 bilden einen ersten Flüssigkeitskreislauf. Die jeweilige Entnahme der Flüssigkeiten aus den Behältern 11 und 13 kann mittels der Hähne 17 und der Stellmotoren 26 vorgenommen werden. Zur Förderung der Flüssigkeiten dienen hier Kolbenpumpen 18.

Verschiedene weitere Komponenten, wie Schieber 19 mit Stellmotoren 27, ein Flüssigkeitshahn 20, ein Ablaufhahn 21 und Filter 22 sind zur Sicherstellung und Aufrechterhaltung des Betriebs der Spritzeinrichtung 10 vorgesehen. Zur Messung des Durchflusses an verschiedenen Stellen in der Spritzeinrichtung 10 sind Durchflussmesser 23 in die Flüssigkeitsleitungen 15 eingebaut.

Im Vorratstank 11 sind außerdem Einspülleitungen 24 angeordnet. Diese weisen Düsen 25 auf, um ein Umwälzen der Flüssigkeit im Vorratstank 11 zu ermöglichen.

Um die Trägerflüssigkeit 12 mit einem hinzugemischten Inhaltsstoff oder auch Wirkstoff aus der Zusatzflüssigkeit 14 an den Spritzdüsen 16 ausbringen zu können, sind Ventile 28 vorgesehen. Tatsächlich ist jeder Spritzdüse 16 ein separates Ventil 28 im ersten Kreislauf zugeordnet. Diese separaten Ventile 28 dienen zur Freigabe der als Spritzmittel oder Spritzbrühe dienenden Flüssigkeit separat für jede der Spritzdüsen 16.

Um dies im Einzelnen steuern zu können, ist eine hier nicht gezeigte elektronische Steuerung beziehungsweise Computersteuerung erforderlich. Diese kann dann flächenspezifisch bei einer Fahrt der Spritzeinrichtung 10 über ein Feld gezielt einzelne Spritzdüsen 16 aktivieren.

Um die Menge der freigegebenen Flüssigkeit einstellen zu können, können entsprechend einstellbare Ventile 28 vorgesehen sein. Beispielsweise können elektronisch ansteuerbare Pulsweitenmodulierte Ventile 28 verwendet werden. Bei diesen wird ein schnelles, pulsierendes Schalten der Ventile 28 zur Einstellung der freigegebenen Flüssigkeitsmenge verwendet. Alternativ sind aber auch andere Möglichkeiten zur Erstellung denkbar, beispielsweise können Blenden oder auch lediglich stufenweise öffnende und schließende Ventile vorgesehen sein. Dies ist insbesondere abhängig von der zu berücksichtigenden Genauigkeit bei der flächenspezifischen Ausbringung der zu spritzenden Flüssigkeit.

Um gezielt einen oder mehrere Wirkstoffe 29 zur Trägerflüssigkeit 12 hinzugeben zu können, ist wenigstens ein Wirkstofftank 30 mit einer Menge Wirkstoff 29 darin vorgesehen. Im gezeigten Ausführungsbeispiel sind zwei Wirkstofftanks 30 dargestellt. In diesen kann auf Grund ihres geringen Volumens eine geringe Vorverdünnung, beispielsweise das Auflösen von festen Wirkstoffen, erreicht werden. Jeder dieser Wirkstofftanks 30 ist über eine Dosiereinrichtung 31, beispielsweise bestehend aus einer Hochdruckpumpe und/oder entsprechender Ventiltechnik, mit einem zweiten Kreislauf von Flüssigkeitsleitungen 32 verbunden. Zur Förderung des Wirkstoffs 29 durch die Flüssigkeitsleitung 32 des zweiten Kreislaufs ist eine Kreiselpumpe 33 vorgesehen. Ein Ventil 34 dient zur Einstellung des Umlaufs im Kreislauf. Mittels zweier Durchflussmesser 35 wird die durch die Spritzdüsen 16 abgegebene Flüssigkeitsmenge als Differenz des umgewälzten Wirkstoffs 29 im Kreislauf ermittelt.

Die Flüssigkeitsleitung 32 ist ebenfalls mit separaten Ventilen 36 an jeder Spritzdüse 16 mit dieser verbunden. Somit kann sowohl mit den Ventilen 28 des ersten Kreislaufs als auch mit den Ventilen 36 des zweiten Kreislaufs unabhängig voneinander eine Einspritzung von Flüssigkeit aus den beiden Kreisläufen in die Spritzdüse 16 erfolgen. Die Spritzdüse 16 weist hierzu eine Mischkammer 37 auf. In dieser Mischkammer 37 vermischen sich die eingespritzten Flüssigkeiten, nämlich insbesondere die Trägerflüssigkeit 12 und der Wirkstoff 29.

Der Wirkstoffkreislauf weist noch einige weitere Besonderheiten auf. Es erfolgt nämlich in der Regel keine Zugabe des Wirkstoffs 29 in Reinform zum zweiten Kreislauf mit den Flüssigkeitsleitungen 32. Stattdessen kann über eine Verbindungsleitung 38 Trägerflüssigkeit 12 aus dem ersten Kreislauf in den zweiten Kreislauf abgegeben werden.

Hierzu kann ein gegebenenfalls im ersten Kreislauf vorhandener Überdruck genügen. In diesem Fall öffnet ein in der Verbindungsleitung 38 angeordnetes Rückschlagventil 40 und lässt Trägerflüssigkeit 12 passieren. Dies ist beispielsweise der Fall, wenn der Druck in der Flüssigkeitsleitung 32 durch Abgabe von Flüssigkeit durch die Spritzdüsen 16 geringer ist als der Druck im ersten Kreislauf. Dann wird dementsprechend Trägerflüssigkeit 12 über das Überdruckventil 40 übergeleitet.

Alternativ kann auch eine hier gestrichelt eingezeichnete Überdruckpumpe 39 vorgesehen sein. Diese kann für einen kontinuierlichen Fluss beziehungsweise bedarfsgerechte Bereitstellung von Trägerflüssigkeit 12 im zweiten Kreislauf vorgesehen sein.

In jedem Fall kann eine geeignete Dosierung eines oder mehrerer Wirkstoffe 29 aus den beiden Wirkstofftanks 30 mittels der beiden Dosiereinheiten 31 sichergestellt werden. Durch entsprechende Einstellung des Mischungsverhältnisses über das Ventil 34 und die Kreiselpumpe 33 mit der Dosiereinrichtung 31 kann eine entsprechende Einstellung der Konzentration der Wirkstoffe 29 erfolgen. Gegebenenfalls können auch weitere Messeinrichtungen, wie zusätzliche Durchflussmesser oder ähnliches vorgesehen sein, um die Konzentration der Wirkstoffe 29 im zweiten Kreislauf einzustellen.

In einer alternativen, hier nicht gezeigten Ausführungsform kann der Zusatztank 13 mit der Zusatzflüssigkeit 14 entfallen. Die Zusatzflüssigkeit 14 kann dann entweder entfallen und durch die Zugabe eines der Wirkstoffe 29 im zweiten Kreislauf ersetzt werden. Alternativ kann ein als Restmenge unschädlicher Wirkstoff 29 direkt in den Vorratstank 11 zur Trägerfüssigkeit 12 hinzugegeben werden. Bei einer derartigen Ausführung der Erfindung kann die Zudosierung wenigstens eines weiteren Wirkstoffs 29 im zweiten Kreislauf erfolgen, sodass bezüglich dieser Wirkstoffe 29 keine Restmengen im Vorratstank 11 verbleiben. Lediglich minimale Restmengen verbleiben im zweiten Kreislauf der Flüssigkeitsleitungen 32.

Das erfindungsgemäße Verfahren läuft wie folgt:
Die Trägerflüssigkeit 12 wird dem Vorratstank 11 entnommen. Gegebenenfalls wird diese mit einer Zusatzflüssigkeit 14 aus dem Zusatztank 13 vermischt. Hierzu dienen die in die Flüssigkeitsleitungen 15 eingebrachten Mischer 17, Schieber 19 und die zum Umpumpen vorgesehenen Kreiselpumpen 18.

Die Trägerflüssigkeit 12 wird im ersten Kreislauf über die Flüssigkeitsleitungen 15 mittels der Kreiselpumpen 18 umgewälzt. Bedarfsweise wird über die Ventile 28 Trägerflüssigkeit 12 an die Spritzdüsen 16 abgegeben. Die Spritzdüsen 16 sind zum Freigeben der Flüssigkeit auf das Feld beziehungsweise die Pflanzen, also letztlich die Umgebung, ausgebildet.

Über dem zweiten Kreislauf mit den Flüssigkeitsleitungen 32 wird eine Zudosierung wenigstens eines Wirkstoffs 29 vorgenommen. Aus einem oder beiden der Wirkstofftanks 30 werden die gewünschten Mengen des wenigstens einen Wirkstoffs 29 entnommen und dem zweiten Kreislauf in den Flüssigkeitsleitungen 32 mittels der Dosiereinrichtungen 31 zugegeben. Die Kreiselpumpe 33 dient zum Umwälzen der im zweiten Kreislauf enthaltenen Flüssigkeiten. Die Konzentration der Wirkstoffe 29 wird über eine entsprechende Vermischung mit der Trägerflüssigkeit 12 eingestellt. Hierzu wird über eine Verbindungsleitung 38 und ein Rückschlagventil 40 Trägerflüssigkeit 12 aus dem ersten Kreislauf zugeführt. Gegebenenfalls kann die Trägerflüssigkeit 12 mit der Zusatzflüssigkeit 14 vermischt sein.

Die im zweiten Kreislauf bereitgestellte Flüssigkeit mit dem wenigstens einem Wirkstoff 29 kann dann über die separaten Ventile 36 an die Spritzdüsen 16 abgegeben werden. In den Mischklammern 37 der einzelnen Spritzdüsen 16 werden die durch die Trägerflüssigkeit 12 verdünnten Wirkstoffe 29 des zweiten Kreislaufs mit der direkt über die Ventile 28 eingespritzten Trägerflüssigkeiten 12 zusammengegeben. Es erfolgt in den Mischkammern 37 eine Vermischung und letztlich eine Freigabe an die Umgebung über die Spritzdüsen 16. Somit wird nur die jeweils benötigte Menge an Wirkstoff 29 im zweiten Kreislauf hergestellt. Eine Bereitstellung großer Mengen vorverdünnten Wirkstoffs 29 in der Trägerflüssigkeit 12 ist erfindungsgemäß nicht vorgesehen. Somit entfällt die Entsorgung großer vorverdünnter Mengen des vorverdünnten Wirkstoffs 29.

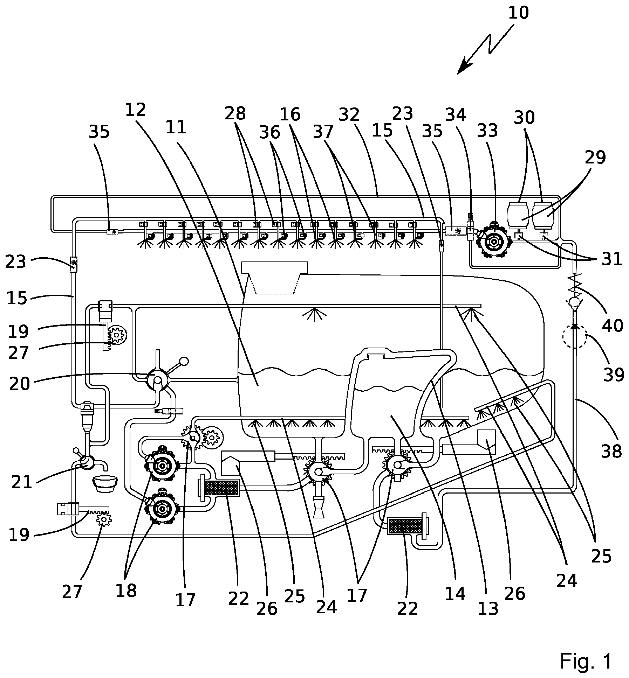

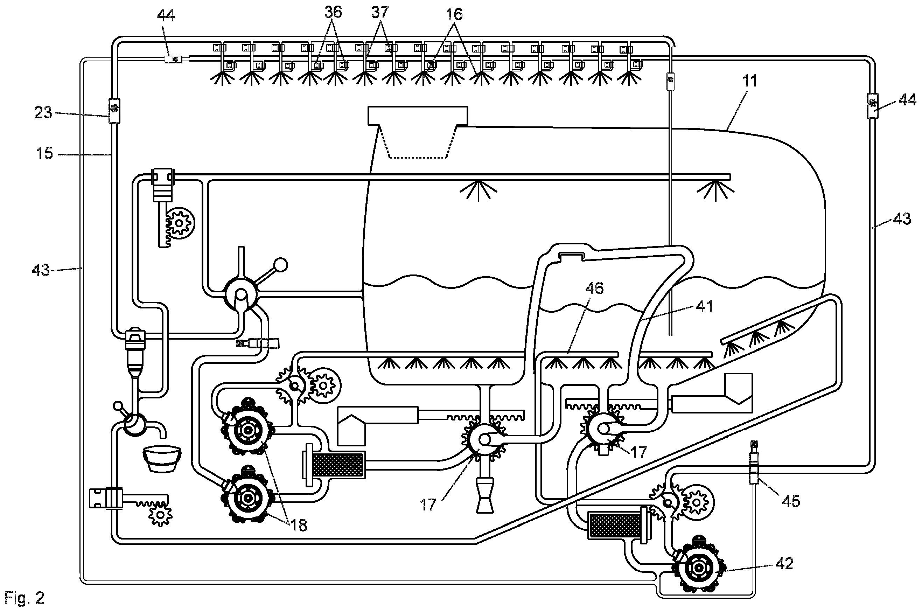

Eine alternative Ausgestaltung ist in Figur 2 gezeigt. Hierbei sind ein Vorratstank 11, entsprechende Flüssigkeitsleitungen 15, Spritzdüsen 16, Kreiselpumpen 18 Durchflussmesser 23, Ventile 36 sowie Mischkammern 37 und weitere hydraulische Bauteile entsprechend Figur 1 vorgesehen.

Überdies ist nun anstatt des in Figur 1 gezeigten Zusatztanks ein Wirkstofftank 41 vorgesehen, welcher zur Aufbewahrung eines vorverdünnten Wirkstoffs dient. Dieser ist charakterisiert durch eine Viskosität, welche der der Trägerflüssigkeit ähnelt und somit ein Vermischen in den Mischkammern 37 erleichtert. Andererseits ist der Verdünnungsgrad gering genug, um gegebenenfalls übrig bleibende Restmengenvolumina noch handhaben zu können. Typische Restmengen sind hier weniger als 50 l insbesondere weniger als 20 l. Typischerweise besitzt der vorverdünnte Wirkstoff eine 5 bis 50 fach höhere Wirkstoffmengenkonzentration, insbesondere eine 10 bis 30 fach höhere Wirkstoffmengenkonzentration, als die auf dem Feld ausgesprühte Brühe.

Um den vorverdünnten Wirkstoff zu den Spritzdüsen 16 bewegen zu können dient eine weitere Kolbenpumpe 42, welche den vorverdünnten Wirkstoff über eine Ringleitung 43 zu den Spritzdüsen pumpt. Der Durchsatz wird mittels der Durchflussmesser 44 gemessen, wobei die Differenz des Durchflusses auf die mittels der Spritzdüsen ausgebrachte vorverdünnte Brühe schließen lässt. Die Durchflussmenge kann mittels eines manuellen Ventils 45 einstellbar oder über ein entsprechendes automatisches Ventil an Hand der Messwerte der Durchflussmesser regelbar sein. Überschüssige Pumpleistung kann zum Umwälzen des vorverdünnten Wirkstoffs mittels des Rührwerks 46 verwendet werden. Über die Hähne 17 kann die Entnahmequelle der jeweils zu pumpenden und auszubringenden Flüssigkeit gewählt werden.

Das Mischen des vorverdünnten Wirkstoffs mit der Trägerflüssigkeit, typischerweise Wasser, erfolgt analog zu dem Ausführungsbeispiel in Figur 1 in den Mischkammern 37, in welche der vorverdünnte Wirkstoff mittels der Ventile 36 eindosiert wird. Die Trägerflüssigkeit kann auch denselben Wirkstoff wie die vorverdünnte Brühe in niedrigerer Konzentration oder einen anderen Wirkstoff enthalten. Auf diese Weise kann lokal ein weiterer Wirkstoff oder derselbe Wirkstoff mit höherer Dosierung aufgebracht werden.

## Patentansprüche

1. Spritzeinrichtung zum Versprühen von Flüssigkeiten, insbesondere für landwirtschaftliche Zwecke, mit wenigstens einem Vorratstank (11) für eine Trägerflüssigkeit (12), insbesondere Wasser, mit einer Vielzahl separat ansteuerbarer Spritzdüsen (16) zum Versprühen der Trägerflüssigkeit (12), und mit wenigstens einer Pumpeinrichtung zur Förderung der Trägerflüssigkeit (12) aus dem wenigstens einen Vorratstank (11) zu den Spritzdüsen (16) durch wenigstens eine Flüssigkeitsleitung (15, 32), **dadurch gekennzeichnet, dass** Spritzdüsen (16) wenigstens eine Einspeisevorrichtung zum Vermischen wenigstens eines Wirkstoffs (29) aus einem Wirkstofftank (30) mit der Trägerflüssigkeit (12) vorweisen,
und
der Wirkstoff (29) den Spritzdüsen (16) zum Zuführen und Vermischen mit der Trägerflüssigkeit (12) in vorverdünnter Form zuführbar ist, wobei ein Kreislauf für den wenigstens einen vorverdünnten Wirkstoff (29) vorgesehen ist und die Spritzdüsen (16) jeweils wenigstens ein individuell ansteuerbares Ventil (36) aufweisen, wobei das Ventil (36) als pulsweitenmoduliertes Ventil ausgebildet ist und das Vermischen unmittelbar an oder in den Spritzdüsen (16) erfolgt.

2. Spritzeinrichtung nach Anspruch 1, **dadurch gekennzeichnet, dass** der wenigstens eine Wirkstoff (29) im Wirkstofftank (30) in konzentrierter Form vorliegt, insbesondere als Wirkstoffkonzentrat, oder in verdünnter Form vorliegt.

3. Spritzeinrichtung nach einem der vorhergehenden Ansprüche, **dadurch gekennzeichnet, dass** mittels einer Pumpe (42) ein vorverdünnter Wirkstoff aus einem Wirkstofftank (41) angesaugt und durch eine Ringleitung (43) gepumpt wird, so dass der vorverdünnte Wirkstoff direkt im Bereich der Spritzdüsen (16) ansteht, wobei der vorverdünnte Wirkstoff eine im Vergleich zum auf dem Feld ausgebrachten Wirkstoff 5 bis 50 fach höhere, insbesondere eine 10 bis 30 fach höhere, Konzentration an Wirkstoff aufweist.

4. Spritzeinrichtung nach einem der vorhergehenden Ansprüche, **dadurch gekennzeichnet, dass** der wenigstens eine Wirkstoff (29) zur Verdünnung mit Trägerflüssigkeit (12) versetzt ist, wobei der wenigstens eine verdünnte Wirkstoff (29) in wenigstens einem separaten Tank, insbesondere Wirkstofftank (30), und/oder wenigstens einem Leitungsabschnitt, insbesondere der wenigstens einen Flüssigkeitsleitung (32), bevorratet und/oder gemischt wird.

5. Spritzeinrichtung nach Anspruch 4, **dadurch gekennzeichnet, dass** wenigstens eine Pumpe (39), vorzugsweise Überdruckpumpe und/oder wenigstens ein Rückschlagventil (40) zur Zuführung von Trägerflüssigkeit (12) zum wenigstens einen Wirkstoff (29) vorgesehen sind/ist.

6. Spritzeinrichtung nach einem der vorhergehenden Ansprüche, **dadurch gekennzeichnet, dass** wenigstens eine separate Flüssigkeitsleitung (32) zum Fördern des wenigstens einen Wirkstoffs (29) vom Wirkstofftank (30) zu den Spritzdüsen (16) vorgesehen ist, vorzugsweise mit wenigstens einer separaten Pumpeinrichtung.

7. Spritzeinrichtung nach einem der vorhergehenden Ansprüche, **dadurch gekennzeichnet, dass** wenigstens eine Pumpe (33), insbesondere Umwälzpumpe, zum Umwälzen des wenigstens einen vorverdünnten Wirkstoffs (29) im Kreislauf vorgesehen ist.

8. Spritzeinrichtung nach einem der vorhergehenden Ansprüche, **dadurch gekennzeichnet, dass** mit dem wenigstens einen individuell ansteuerbaren Ventil (36) die Abgabe von Trägerflüssigkeit (12) und/oder Wirkstoff (29) aus jeweils wenigstens einer vorzugsweise unabhängigen Flüssigkeitsleitung (15, 32) gesteuert wird, wobei vorzugsweise mehrere Ventile (36) und/oder Blenden je Spritzdüse (16) gesteuert werden.

9. Spritzeinrichtung nach einem der vorhergehenden Ansprüche, **dadurch gekennzeichnet, dass** das Ventil (36) bezüglich des Durchsatzes an Flüssigkeit einstellbar und/oder regelbar sind.

10. Spritzeinrichtung nach einem der vorhergehenden Ansprüche, **dadurch gekennzeichnet, dass** die Blende einen vor dem Ausbringvorgang festgelegten Durchsatz an Flüssigkeit aufweist.

11. Verfahren zum Versprühen von Flüssigkeiten, insbesondere für landwirtschaftliche Zwecke, mit einer Spritzeinrichtung (10) nach einem der vorhergehenden Ansprüche, wobei eine Trägerflüssigkeit (12), insbesondere Wasser, mittels wenigstens einer Pumpeinrichtung aus einem Vorratstank (11) zu einer Vielzahl separat ansteuerbarer Spritzdüsen (16) gefördert wird, **dadurch gekennzeichnet, dass** wenigstens ein Wirkstoff (29) im Bereich der Spritzdüsen (16) mit der Trägerflüssigkeit (12) vermischt wird und das Vermischen unmittelbar an oder in den Spritzdüsen erfolgt, und
der wenigstens eine Wirkstoff (29) vor dem Mischen im Bereich der Spritzdüsen (16) in vorverdünnter Form vorliegt.

12. Verfahren nach Anspruch 11, **dadurch gekennzeichnet, dass** der Wirkstoff (29) zur zu verspritzenden Trägerflüssigkeit (12) im Bereich der Spritzdüsen (16) zugegeben wird, vorzugsweise in einer Mischkammer (37).

13. Verfahren nach Anspruch 11 oder 12, **dadurch gekennzeichnet, dass** der wenigstens eine Wirkstoff (29) zu den Spritzdüsen (16) in verdünnter Form transportiert wird, vorzugsweise gepumpt wird.

14. Verfahren nach einem der Ansprüche 11 bis 13, **dadurch gekennzeichnet, dass** der vorverdünnte Wirkstoff im Vergleich zum auf dem Feld ausgebrachten Wirkstoff eine 5 bis 50 fach höhere, insbesondere eine 10 bis 30 fach höhere, Konzentration aufweist.

15. Verfahren nach einem der Ansprüche 11 bis 14, **dadurch gekennzeichnet, dass** der wenigstens eine Wirkstoff (29) in einem separaten Kreislauf vermischt und/oder bevorratet und/oder umgewälzt wird, wobei mehrere der Spritzdüsen (16), vorzugsweise alle Spritzdüsen (16) mittels des Kreislaufs mit dem wenigstens einen Wirkstoff (29) versorgt werden.

16. Verfahren nach einem der Ansprüche 11 bis 15, **dadurch gekennzeichnet, dass** die Trägerflüssigkeit (12) wenigstens einen verdünnten Wirkstoff (29) enthält, wobei die Mischung von Trägerflüssigkeit (12) und Wirkstoff (29) vorzugsweise im Vorratstank (11) erfolgt und/oder wobei die Mischung mittels einer separaten Mischvorrichtung hergestellt wird.

## Claims

1. Spraying device for spraying liquids, in particular for agricultural purposes, comprising at least one storage tank (11) for a carrier liquid (12), in particular water, a plurality of separately controllable spray nozzles (16) for spraying the carrier liquid (12), and at least one pump device for conveying the carrier liquid (12) from the at least one storage tank (11) to the spray nozzles (16) through at least one liquid line (15, 32), **characterized in that** the spray nozzles (16) have at least one feed apparatus for mixing at least one active substance (29) from an active substance tank (30) with the carrier liquid (12),
and
the active substance (29) can be supplied to the spray nozzles (16) for supplying and mixing with the carrier liquid (12) in pre-diluted form, a circuit being provided for the at least one pre-diluted active substance (29), and the spray nozzles (16) each having at least one individually controllable valve (36), the valve (36) being designed as a pulse-width-modulated valve and the mixing taking place directly at or in the spray nozzles (16).

2. Spraying device according to claim 1, **characterized in that** the at least one active substance (29) is present in the active substance tank (30) in concentrated form, in particular as an active substance concentrate, or in diluted form.

3. Spraying device according to either of the preceding claims, **characterized in that,** by means of a pump (42), a pre-diluted active substance is drawn in from an active substance tank (41) and pumped through an annular line (43), such that the pre-diluted active substance is present directly in the region of the spray nozzles (16), the pre-diluted active substance having a concentration of active substance that is 5 to 50 times higher, in particular 10 to 30 times higher, in comparison with the active substance applied to the field.

4. Spraying device according to any of the preceding claims,
**characterized in that** the at least one active substance (29) is mixed with carrier liquid (12) for dilution, the at least one diluted active substance (29) being stored and/or mixed in at least one separate tank, in particular an active substance tank (30), and/or at least one line portion, in particular the at least one liquid line (32).

5. Spraying device according to claim 4, **characterized in that** at least one pump (39), preferably an overpressure pump, and/or at least one check valve (40) is/are provided for supplying carrier liquid (12) to the at least one active substance (29).

6. Spraying device according to any of the preceding claims,
**characterized in that** at least one separate liquid line (32) is provided for conveying the at least one active substance (29) from the active substance tank (30) to the spray nozzles (16), preferably with at least one separate pump device.

7. Spraying device according to any of the preceding claims,
**characterized in that** at least one pump (33), in particular a circulation pump, is provided for circulating the at least one pre-diluted active substance (29) in the circuit.

8. Spraying device according to any of the preceding claims,
**characterized in that** the delivery of carrier liquid (12) and/or active substance (29) from in each case at least one preferably independent liquid line (15, 32) is controlled by the at least one individually controllable valve (36), a plurality of valves (36) and/or orifice plates per spray nozzle (16) preferably being controlled.

9. Spraying device according to any of the preceding claims,
**characterized in that** the valve (36) can be adjusted and/or controlled with respect to the throughput of liquid.

10. Spraying device according to any of the preceding claims,
**characterized in that** the orifice plate has a throughput of liquid defined before the dispensing process.

11. Method for spraying liquids, in particular for agricultural purposes, using a spraying device (10) according to any of the preceding claims, wherein a carrier liquid (12), in particular water, is conveyed by means of at least one pump device from a storage tank (11) to a plurality of separately controllable spray nozzles (16), **characterized in that** at least one active substance (29) is mixed with the carrier liquid (12) in the region of the spray nozzles (16) and the mixing takes place directly at or in the spray nozzles, and
the at least one active substance (29) is present in pre-diluted form before mixing in the region of the spray nozzles (16).

12. Method according to claim 11, **characterized in that** the active substance (29) is added to the carrier liquid (12) to be sprayed in the region of the spray nozzles (16), preferably in a mixing chamber (37).

13. Method according to either claim 11 or claim 12, **characterized in that** at least one active substance (29) is transported, preferably pumped, to the spray nozzles (16) in diluted form.

14. Method according to any of claims 11 to 13, **characterized in that** the pre-diluted active substance has a concentration that is 5 to 50 times higher, in particular 10 to 30 times higher, in comparison with the active substance applied to the field.

15. Method according to any of claims 11 to 14, **characterized in that** the at least one active substance (29) is mixed and/or stored and/or circulated in a separate circuit, a plurality of the spray nozzles (16), preferably all of the spray nozzles (16), being supplied with the at least one active substance (29) by means of the circuit.

16. Method according to any of claims 11 to 15, **characterized in that** the carrier liquid (12) contains at least one diluted active substance (29), the carrier liquid (12) and the active substance (29) preferably being mixed in the storage tank (11) and/or the mixture being produced by means of a separate mixing apparatus.

## Revendications

1. Dispositif pulvérisateur pour la pulvérisation de liquides, en particulier à des fins agricoles, pourvu d'au moins un réservoir de stockage (11) pour un liquide support (12), en particulier de l'eau, d'une multitude de buses de pulvérisation (16) pouvant être commandées séparément pour la pulvérisation du liquide support (12) et d'au moins un dispositif de pompe pour le transport du liquide support (12) à partir dudit au moins un réservoir de stockage (11) vers les buses de pulvérisation (16) à travers au moins une conduite à liquide (15, 32), **caractérisé en ce que** les buses de pulvérisation (16) présentent au moins un dispositif d'injection pour le mélange d'au moins une substance active (29) à partir d'un réservoir à substance active (30) avec le liquide support (12)
et
la substance active (29), pour l'acheminement et le mélange avec le liquide support (12), peut être acheminée sous forme prédiluée aux buses de pulvérisation (16), un circuit pour ladite au moins une substance active (29) prédiluée étant prévu et les buses de pulvérisation (16) présentant à chaque fois au moins une vanne (36) pouvant être commandée individuellement, la vanne (36) étant conçue comme vanne modulée en largeur d'impulsion et le mélange ayant lieu directement au niveau des buses de pulvérisation (16) ou dans celles-ci.

2. Dispositif pulvérisateur selon la revendication 1, **caractérisé en ce que** ladite au moins une substance active (29) se trouve sous forme concentrée, en particulier sous forme de concentrat de substance active, ou sous forme diluée dans le réservoir à substance active (30).

3. Dispositif pulvérisateur selon l'une quelconque des revendications précédentes, **caractérisé en ce que,** au moyen d'une pompe (42), une substance active prédiluée provenant d'un réservoir à substance active (41) est aspirée et pompée à travers une conduite annulaire (43), de telle sorte que la substance active prédiluée est en attente directement dans la zone des buses de pulvérisation (16), la substance active prédiluée présentant une concentration en substance active supérieure d'un facteur 5 à 50, en particulier de 10 à 30, par rapport à celle appliquée sur le champ.

4. Dispositif pulvérisateur selon l'une quelconque des revendications précédentes, **caractérisé en ce que** ladite au moins une substance active (29) est mélangée avec le liquide support (12) pour la dilution, ladite au moins une substance active (29) diluée étant approvisionnée et/ou mélangée dans au moins un réservoir séparé, en particulier le réservoir à substance active (30), et/ou dans au moins une section de conduite, en particulier de ladite au moins une conduite à liquide (32).

5. Dispositif pulvérisateur selon la revendication 4, **caractérisé en ce qu'**au moins une pompe (39), de préférence une pompe de surpression, et/ou au moins un clapet antiretour (40) est/sont utilisé(e)(s) pour l'acheminement du liquide support (12) vers ladite au moins une substance active (29).

6. Dispositif pulvérisateur selon l'une quelconque des revendications précédentes, **caractérisé en ce qu'**au moins une conduite à liquide (32) séparée est utilisée pour le transport de ladite au moins une substance active (29) à partir du réservoir à substance active (30) vers les buses de pulvérisation (16), de préférence à l'aide d'au moins un dispositif de pompe séparé.

7. Dispositif pulvérisateur selon l'une quelconque des revendications précédentes, **caractérisé en ce qu'**au moins une pompe (33), en particulier une pompe de circulation, est utilisée pour la circulation de ladite au moins une substance active (29) prédiluée dans le circuit.

8. Dispositif pulvérisateur selon l'une quelconque des revendications précédentes, **caractérisé en ce que** la distribution de liquide support (12) et/ou de substance active (29) à partir d'au moins une conduite à liquide (15, 32) indépendante respective est commandée à l'aide de ladite au moins une vanne (36) pouvant être commandée individuellement, plusieurs vannes (36) et/ou obturateurs étant de préférence commandé(e)s par buse de pulvérisation (16).

9. Dispositif pulvérisateur selon l'une quelconque des revendications précédentes, **caractérisé en ce que** la vanne (36) est réglable et/ou régulable en ce qui concerne le débit de liquide.

10. Dispositif pulvérisateur selon l'une quelconque des revendications précédentes, **caractérisé en ce que** l'obturateur présente un débit de liquide fixé avant le processus d'épandage.

11. Procédé pour la pulvérisation de liquides, en particulier à des fins agricoles, à l'aide d'un dispositif pulvérisateur (10) selon l'une quelconque des revendications précédentes, un liquide support (12), en particulier de l'eau, étant transporté à l'aide d'au moins un dispositif de pompe à partir d'un réservoir de stockage (11) vers une multitude de buses de pulvérisation (16) pouvant être commandées séparément, **caractérisé en ce qu'**au moins une substance active (29) est mélangée avec le liquide support (12) dans la zone des buses de pulvérisation (16) et le mélange a lieu directement au niveau des buses de pulvérisation ou dans celles-ci, et
ladite au moins une substance active (29) se trouve sous forme prédiluée avant le mélange dans la zone des buses de pulvérisation (16).

12. Procédé selon la revendication 11, **caractérisé en ce que** la substance active (29) est ajoutée au liquide support (12) à pulvériser dans la zone des buses de pulvérisation (16), de préférence dans une chambre de mélange (37).

13. Procédé selon la revendication 11 ou 12, **caractérisé en ce que** ladite au moins une substance active (29) est transportée, de préférence pompée, sous forme diluée vers les buses de pulvérisation (16).

14. Procédé selon l'une quelconque des revendications 11 à 13,
**caractérisé en ce que** la substance active prédiluée présente une concentration supérieure d'un facteur 5 à 50, en particulier supérieure de 10 à 30, à celle appliquée sur le champ.

15. Procédé selon l'une quelconque des revendications 11 à 14,
**caractérisé en ce que** ladite au moins une substance active (29) est mélangée et/ou approvisionnée et/ou mise en circulation dans un circuit séparé, plusieurs des buses de pulvérisation (16), de préférence toutes les buses de pulvérisation (16), étant alimentées en ladite au moins une substance active (29) au moyen du circuit.

16. Procédé selon l'une quelconque des revendications 11 à 15, **caractérisé en ce que** le liquide support (12) contient au moins une substance active (29) diluée, le mélange de liquide support (12) et de substance active (29) ayant de préférence lieu dans le réservoir de stockage (11) et/ou le mélange étant préparé au moyen d'un dispositif de mélange séparé.
